# EUROPEAN PATENT APPLICATION

(11) **EP 1 011 060 A1**
(43) Date of publication of application: **21.06.2000**
(21) Application number: 99119933.2
(22) Date of filing: 11.10.1999
(51) Int. Cl.: G06F 17/60, G07G 1/14

(54) **Method for distributing personalized offers to holders of loyalty cards at the entrance of points of sale**

(30) Priority: 18.12.1998 IT MI982749
(71) Applicant: BRAIN S.r.l., I-20124 Milano (IT)
(72) Inventor: Cividini, Marcello, 22010 Argegno (Como) (IT)
(74) Representative: Modiano, Guido, Dr.-Ing.

(57) **Abstract**

A method for distributing personalized offers to holders of loyalty cards at the entrance of points of sale, characterized in that it comprises the steps of:
storing in a database (10) purchasing data of individual customers who hold loyalty cards (14);
rating customers who hold loyalty cards (14) into a plurality of classes according to the type of purchase that they normally make;
on the basis of said purchasing data present in said database (10) and of said consumer rating, proposing personalized offers to the individual consumers at the entrance of a point of sale.

## Description

The present invention relates to a method for distributing personalized offers to holders of loyalty cards at the entrance of points of sale.

More particularly, the invention relates to a method and an associated apparatus for distributing personalized offers to holders of loyalty cards at the entrance of points of sale on the basis of a historical analysis of the purchases made by the individual users.

It is known that methods and systems for distributing discount vouchers to users of points of sale in the store-retailing sector when they purchase products are widespread.

In particular, when a customer of a point of sale makes a purchase and is about to pass through the checkout gates, a scanning device detects, during the payment process, not only the price but also the brand and the product purchased by the customer, and can accordingly prepare discount vouchers to be applied on the spot, or discount vouchers that can be printed and given to the customer for subsequent purchases.

However, the above described system does not allow to keep a historical log of the purchases made by the customer and therefore to provide for the issuing of personalized discount vouchers which allow to adapt to the characteristics of the customer or even to give the customer an inducement toward specific purchases, taking into account habitual preferences.

In conventional systems of the type using a loyalty card which identifies the consumers in order to send them discounts and advantages on purchases of various products, the loyalty cards are read by optical readers of scanners located at the exit gates of a point of sale and the system calculates the discounts related to the special offers on the articles on offer.

The system can also accumulate loyalty points on behalf of the consumers, allowing them to access rewards of various kinds or purchase vouchers when preset purchase thresholds are reached.

In all cases, however, the discount vouchers are issued at the exit of the point of sale, i.e., when the customer is paying, and their issue is directly correlated to the current purchases and does not take into account at all the purchases made in previous occasions by the customer; therefore it cannot accurately rate the customer on the basis of the type of products purchased.

The aim of the present invention is to provide a method for distributing personalized offers to holders of loyalty cards at the entrance of points of sale which allows to take into account the past purchases of the individual customers and therefore to provide targeted offers.

Within the scope of this aim, an object of the present invention is to provide a method for distributing personalized offers to holders of loyalty cards which allows to assign to each customer a different value according to the type of purchase made in the past.

Another object of the present invention is to provide a method for distributing personalized offers to holders of loyalty cards which allows effective use of sales data related to the individual customers.

Another object of the present invention is to provide a method for distributing personalized offers to holders of loyalty cards which allows to evaluate the potential of each individual consumer, providing a useful sales tool.

Another object of the present invention is to provide a method for distributing personalized offers to holders of loyalty cards which is highly reliable, relatively easy to provide and at competitive costs.

This aim, these and other objects which will become better apparent hereinafter are achieved by a method for distributing personalized offers to holders of loyalty cards at the entrance of points of sale, characterized in that it comprises the steps of:
storing in a database purchasing data of individual customers who hold loyalty cards;
rating customers who hold loyalty cards into a plurality of classes according to the type of purchase that they normally make;
on the basis of said purchasing data present in said database and of said consumer rating, proposing personalized offers to the individual consumers at the entrance of a point of sale.

Further characteristics and advantages of the invention will become apparent from the following description of a preferred but not exclusive embodiment of the method according to the invention, illustrated only by way of non-limitative example in the accompanying drawings, wherein:
Figure 1 is an exemplifying block diagram of the method according to the present invention; and

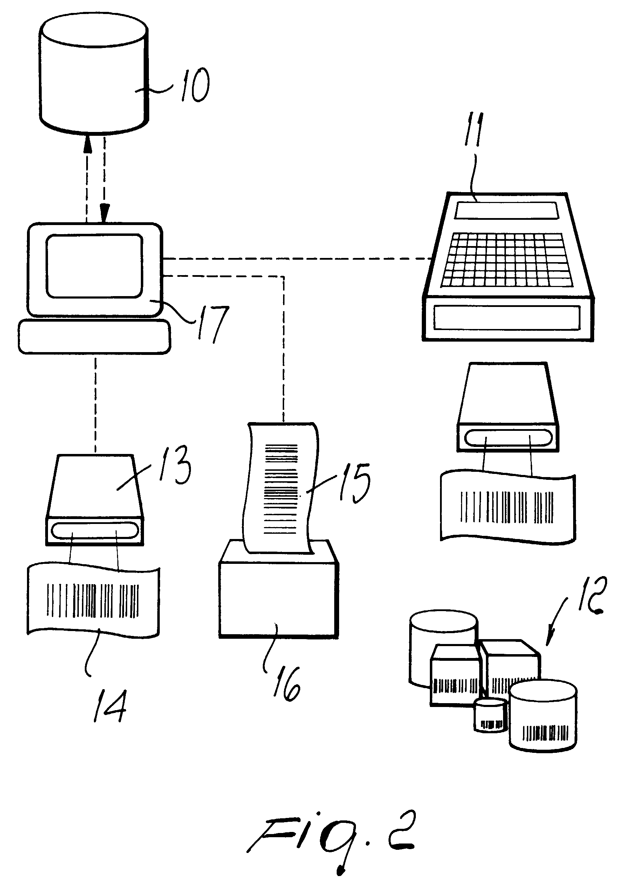

Figure 2 is a block diagram of a preferred but not exclusive embodiment of an apparatus adapted to implement the method according to the present invention.

With reference to the above figures, the method for distributing personalized offers to holders of loyalty cards according to the present invention has the particularity that it has memory means 10 which are adapted to store historical data related to the purchases of all the individual consumers who visit a given point of sale.

Said memory means are accordingly adapted to log, according to their price, brand and type, the individual purchases made by users (products 12) while the items are being checked out by using a scanning device 11.

In this way it is possible to give consumers loyalty cards which then allow access to particular discounts and offers which are studied specifically and are personalized for the individual consumers.

In practice, every consumer who applies for the loyalty card has a data bank associated with him; said data bank is stored in said memory means 10, where all the purchases made over a preset period of time are logged.

On the basis of the purchases made, each consumer is rated and given a value which indicates the degree of profit that he is able to generate.

In detail, each customer or consumer is rated and evaluated according to the profit that he generates and may generate in the future. Then a table is generated for calculating the profit generation capacity of each client and for defining a discriminating value, for example from 0 to 9, which defines the profit class in corresponding tenths.

In other words, assuming the gross profit is 100 and after sorting the customers on the basis of the generated profit, the first 10% of the profit is generated by a small number of customers who deserve a profit rating of 9, and so forth, until one reaches the group that generates the least profit or even a cost and accordingly deserves a profit rating of zero.

In this manner, each customer is rated and the points of sale have a valuable tool for improving in value, increasing or reorientating the purchasing choices of the individual customers.

The method according to the invention provides, on the basis of said data bank stored in the memory means 10, for the distribution of personalized offers to the holders of the loyalty card directly at the entrance of the points of sale. Accordingly, every customer who holds a loyalty card, when he enters a given point of sale, inserts his loyalty card 14 in an adapted scanning device 13, which acquires the name of the customer from the card and, by associating with said customer the profit generation table described earlier, is able to establish personalized offers to be submitted to the customer when he is about to begin his purchasing path inside the point of sale.

In practice, the customer is offered a discount voucher 15 printed by an adapted printer 16 which is connected to processing means 17 which are in turn connected to the memory means 10 and to the scanning device 11 provided at the checkout gate.

Therefore, differently from conventional methods, in which the customers are assigned a discount voucher on the basis of their current purchases and said discount voucher is often meant to be spent in the next visit to the point of sale, the method according to the invention allows to offer customers discount vouchers to be spent during that same visit of the customer to the point of sale.

Furthermore, the connection to the data bank, an archive of the historical data related to the individual customers, allows to personalize and orientate each customer appropriately.

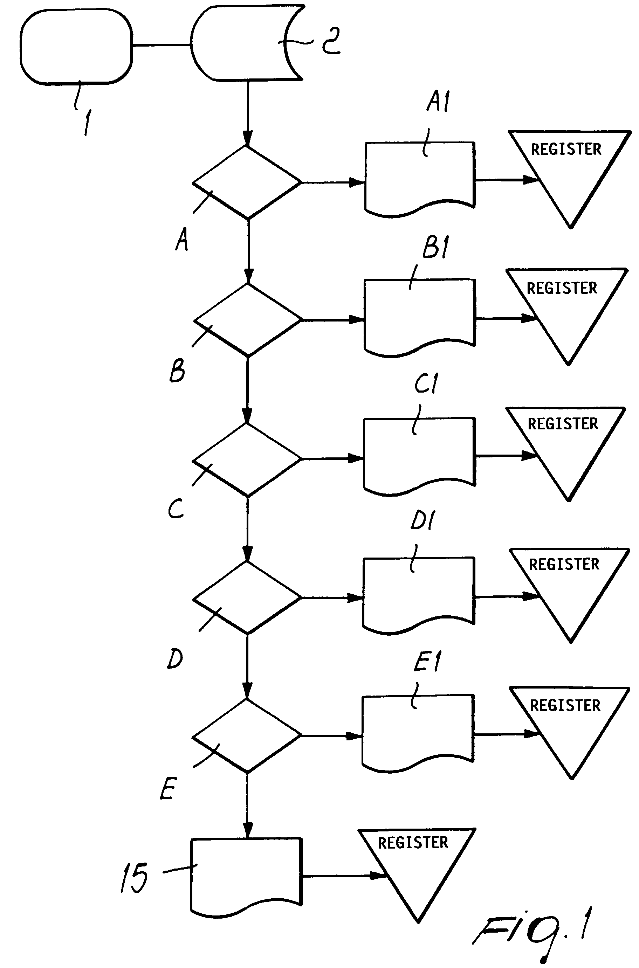

Accordingly, customers are rated, as shown for example in Figure 1, into classes according to their purchasing habits.

For example, it is possible to divide customers into the five classes shown in Figure 1.

Such rating is merely an example and it is quite possible to add or reduce the number of rating classes.

The example of Figure 1 is taken in any case to explain the method according to the invention.

For example, Figure 1 illustrates the loyalty card reading means, designated by the reference numeral 1, which are connected to a data bank 2 stored in the above cited memory means.

Reading the loyalty cards with the reading means 1 and associating the name and surname of the holder of the loyalty card with the historical data archive allows to determine which discount vouchers are to be offered to said consumer.

As shown in Figure 1, the consumers are rated for example into the five classes designated by the reference letters A, B, C, D and E.

Class A groups customers who generate a high volume of purchases; class B includes consumers capable of generating a high profit for the point of sale; class C includes habitual customers, i.e., customers who make purchases without straying from typical patterns; class D groups consumers who are particularly attracted by specific product brands; and class E groups consumers who are loyal only to certain types of product brand.

Depending on their rating into one of the above classes A-E determined on the basis of the historical data defined and stored in the data bank 2, the association with the loyalty card read by the scanning means 1 of each individual customer therefore allows to offer discount vouchers, designated by A1, B1, C1, D1 and E1.

The discount vouchers can, for example in the case of a consumer belonging to class A, bear special offers on additional products; a consumer in class B can instead be attracted by a discount voucher B1 of a different kind, and so forth for the remaining discount vouchers.

For example, it is possible to provide discount vouchers which constitute special offers for a given product, discount vouchers which provide a percentage discount on a given item, discount vouchers with a fixed discount, discount vouchers offering a free test product, discount vouchers dependent on the amount of goods purchased, discount vouchers which offer a free or discounted product combined with another product, time-limited discount vouchers (i.e., a percentage discount on a given article after a certain time of the day), and so forth.

Many possibilities are offered to points of sale thanks to a historical data archive and of specifically generated tables which are adapted to rate the individual loyalty card-holding customers.

The advantage of directly selecting the types of discount voucher to be offered to the customer at the entrance of the point of sale allows to orientate said customer toward an assured purchase instead of offering him a discount voucher to be used during a subsequent visit to the point of sale, without the assurance that he will return and actually use said voucher.
In order to evaluate the types of product purchased by customers at a certain point of sale it is also necessary to generate tables such as the accompanying one, in which a number of items is defined for each product, scores being assigned to each item, said scores being able to define the product so that the potential of each consumer can be compared with different chains of points of sale and can therefore be converted, communicated and sold to the retail industry.

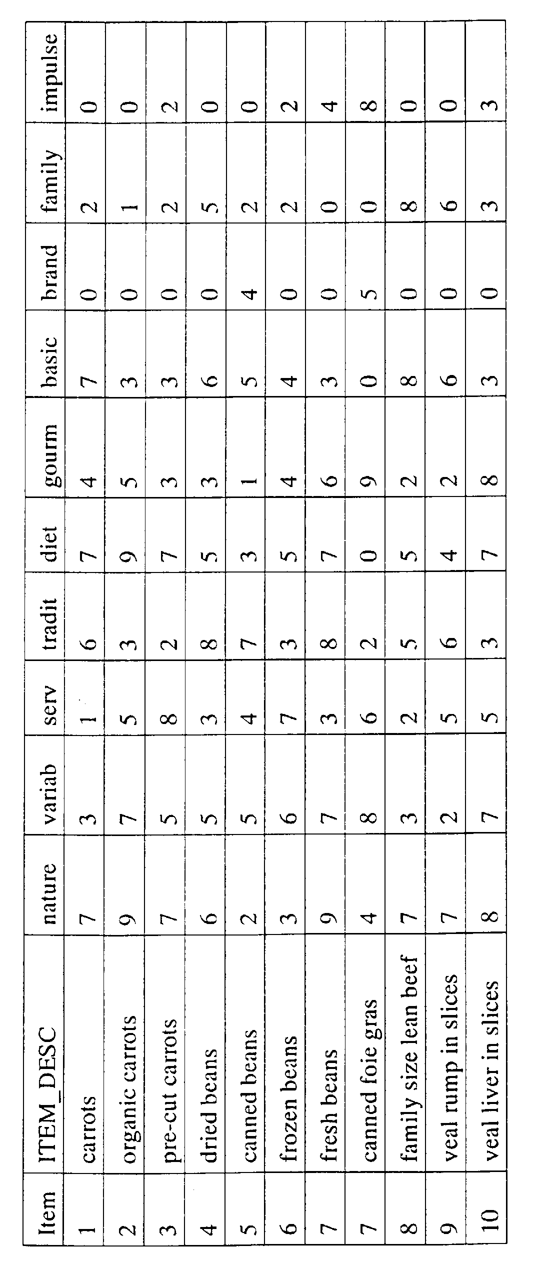

The table or metatable of products shown here by way of example defines an arbitrary value from 0 to 9 in different evaluation categories for each product.

The metatable must be constantly generated and updated with respect to product evolution in order to maintain the stability of the table thus generated.

Accordingly with reference to the accompanying table, evaluation categories are defined for each item and a value is assigned to said categories.

In particular, the following categories are illustrated herein by way of example:
nature: degree of genuineness of the product;
variability: more or less constant presence in the point of sale;
service: degree of service offered to the user, i.e., facilitations allowed by the purchase of a given product (frozen products, for example, have a higher service value than a fresh product);
tradition: indicates whether the product is traditional or not for a given geographical area;
diet: indicates the calorie value of each product in relation to a balanced diet;
gourm: indicates the good taste of the customer in choosing a given product;
basic: indicates the extent to which a given product is a basic product;
brand: indicates whether the brand is important for a certain product;
family: indicates whether the product is purchased by families or not;
impulse: indicates the purchasing impulse with which the product is associated.

Such metatable is used to establish a uniform evaluation of the products purchased by the individual customers which is adapted for any kind of point of sale and not only for a specific point of sale.

In practice it has been observed that the method according to the invention allows to distribute personalized offers to holders of loyalty cards directly at the entrance of a point of sale, accordingly guiding the user toward the purchase of given products or giving an incentive to purchase other products.

The data bank that contains the historical data on purchases made by loyalty card-holding customers allows, thanks to the gradual accumulation of data, to offer ever better and more precisely targeted personalized offers.

The method thus conceived is susceptible of numerous modifications and variations, all of which are within the scope of the inventive concept; all the details may furthermore be replaced with other technically equivalent elements.

The disclosures in Italian Patent Application No. M198A002749 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for distributing personalized offers to holders of loyalty cards at the entrance of points of sale, characterized in that it comprises the steps of:
storing in a database purchasing data of individual customers who hold loyalty cards;
rating customers who hold loyalty cards into a plurality of classes according to the type of purchase that they normally make;
on the basis of said purchasing data present in said database and of said consumer rating, proposing personalized offers to the individual consumers at the entrance of a point of sale.

2. The method according to claim 1, characterized in that said step of rating said consumers into a plurality of classes according to the type of purchase made consists in rating said customers according to the type of profit generated for the point of sale, each profit value determining a rating class.

3. The method according to claim 1, characterized in that it also provides for a step which consists in generating tables for rating the individual products that are present in the point of sale, a plurality of evaluation categories being associated with each product, each category being designated by a numerical value.

4. The method according to claim 1, characterized in that said database is stored in memory means which are connected to scanner means which are adapted to scan the loyalty card of each individual consumer at the entrance of a point of sale.

5. The method according to claim 1, characterized in that said step of rating the consumers into a plurality of classes is performed according to the type of purchase made by said consumers.

6. The method according to claim 3, characterized in that said rating of said consumers is performed on the basis of said product rating tables, the sum of the values for the various categories assigned to each product constituting a global value assigned to said product.
